Europäisches Patentamt

European Patent Office

Office européen des brevets

(11) Veröffentlichungsnummer: **0 361 243**
**A2**

(12) **EUROPÄISCHE PATENTANMELDUNG**

(21) Anmeldenummer: **89117168.8**

(22) Anmeldetag: **16.09.89**

(51) Int. Cl.5 **C08G 59/50 , C09D 5/44 ,**
**C08G 59/56 , C08G 12/46 ,**
**C09D 17/00**

(30) Priorität: **21.09.88 AT 2308/88**

(43) Veröffentlichungstag der Anmeldung:
**04.04.90 Patentblatt 90/14**

(84) Benannte Vertragsstaaten:
**BE DE ES FR GB IT NL SE**

(71) Anmelder: **Vianova Kunstharz**
**Aktiengesellschaft**

**A-8402 Werndorf(AT)**

(72) Erfinder: **Hönig, Helmut, Dr.**
**Seebachergasse 10**
**A-8010 Graz(AT)**
Erfinder: **Matzer, Herbert**
**Grossgrabenweg 21**
**A-8010 Graz(AT)**
Erfinder: **Pampouchidis, Georg, Dr.**
**Obere Teichstrasse 31**
**A-8010 Graz(AT)**

(54) **Verfahren zur Herstellung von Pigmentpastenharzen für kathodisch abscheidbare Überzugsmittelzusammensetzungen.**

(57) Die Erfindung betrifft ein Verfahren zur Herstellung von Pigmentpastenharzen für kathodisch abscheidbare Überzugsmittelzusammensetzungen auf der Basis von aus gegebenenfalls modifizierten Epoxidharzen erhaltenen Epoxidharz-Aminaddukten, die durch anteilige oder vollständige Reaktion von sekundären Aminogruppen mit Formaldehyd Oxazolidinstrukturen aufweisen, und deren durch primär-tertiäre Diamine eingeführten tertiären Aminogruppen zu mindestens 20 Mol % mit einer organischen Säure und einer Monoglycidylverbindung quaterniert sind, und welche in der mit Wasser auf die Verarbeitungsviskosität eingestellten Anlösung eine Gesamtmenge von 80 bis 100 Millimol Säure/100 g Festharz enthalten.

Die erfindungsgemäß hergestellten Produkte ergeben auch bei verschiedenartiger Zusammensetzung der eingesetzten Pigmente Pigmentpasten, welche die unterschiedlichen Anforderungen der Praxis erfüllen, und sowohl in konzentrierter als auch in verdünnter Form eine praxisgerechte Stabilität aufweisen, aufgrund ihrer Rheologie leicht verarbeitbar sind, eine einwandfreie Filmausbildung bei der Abscheidung und beim Vernetzungsvorgang gewährleisten und die Eigenschaften der applizierten Filme nicht negativ beeinflussen.

EP 0 361 243 A2

## Verfahren zur Herstellung von Pigmentpastenharzen für kathodisch abscheidbare Überzugsmittelzusammensetzungen.

Die Erfindung betrifft ein Verfahren zur Herstellung von modifizierten Epoxidharzen, die als Pigmentpastenharze für kathodisch abscheidbare Überzugsmittelzusammensetzungen eingesetzt werden können.

Pigmentpastenharze sind ein wichtiger Bestandteil kathodisch abscheidbarer Überzugsmittelzusammensetzungen und beeinflussen wesentlich die Badparameter, sowie die physikalischen und chemischen Beständigkeitseigenschaften der Lackfilme.

Seit langem werden Pigmentpastenharze auf der Basis von Epoxidharzen in der Patentliteratur beschrieben. So werden in den US-PS 3,936,405 und US-PS 4,035,275 kationische wasserverdünnbare Polymere angeführt, die durch Reaktion von 1,2-Epoxygruppen enthaltenden Polymeren, insbesondere von polyglykolmodifizierten Epoxidharzen, mit Aminsalzen, Phosphin-Säure bzw. Sulfid-Säuregemischen unter Ausbildung von Oniumgruppierungen erhalten werden.

Ähnliche Produkte, die durch Umurethanisierung vernetzt werden, sind in der DE-PS 26 34 211 C2, der DE-OS 26 34 229 A1 oder der DE-OS 29 28 769 A1 beschrieben. Auch bei durch Umesterung vernetzbaren Harzen wird die Pigmentbenetzung durch Einführung quartärer Ammoniumgruppen verbessert und dadurch die Verwendung als Pigmentanreibeharz ermöglicht. Diese Variante wird beispielsweise in der DE-OS 33 22 781 A1 aufgezeigt. Zur Verbesserung der Stabilität dieser Pigmentpasten wird gemäß DE-OS 36 22 710 A 1 vorgeschlagen, die Bildung der quartären Ammoniumgruppen in Gegenwart des Pigmentpulvers vorzunehmen.

Pigmentpastenharze, die Überzüge mit verbesserter Korrosionsfestigkeit ergeben, werden gemäß EP 107 088 A1 erhalten, wenn Monoepoxide, wie Alkylenoxide, Glycidylester oder Glycidylether mit langkettigen tertiären Aminen in Gegenwart von Säure und/oder Wasser unter Bildung von quartären Ammoniumgruppen umgesetzt werden. Eine höhere Pigmentbeladung wird gemäß EP 107 098 A1 ermöglicht, wenn diese Systeme überdies Amidgruppen aufweisen.

Entsprechend EP 107 089 B1 werden Polyepoxide in gleicher Weise umgesetzt, wodurch ebenfalls die Verarbeitung mit höheren Pigmentanteilen möglich ist.

Pigmentpastenharze auf Basis von alkylphenolmodifizierten Epoxidharzen, die Sulfoniumgruppen aufweisen, wie sie in der EP 251 772 A2 beschrieben werden, sollen einen höheren Filmaufbau gewährleisten.

Ein weiterer Typ eines Pigmentpastenharzes wird in der EP 199 473 A1 angeführt, wobei ein epoxidiertes Polybutadien mit einem sekundären Amin reagiert wird und, nach Zusatz einer Säure und einem Monoepoxid, die Einführung von quartären Ammoniumgruppen erfolgt.

Pigmentpastenharze auf Basis von Epoxidharzen, die Oxazolidingruppen aufweisen, werden beispielsweise in den AT-PS 365.214 und AT-PS 380.264 beschrieben. Harze dieser Art zeichnen sich durch gute Allgemeineigenschaften aus und haben trotz der Nachteile bezüglich ihrer Dispergierbarkeit im Badmaterial auch in der Praxis Verwendung gefunden.

Wie sich aus der umfangreichen Literatur auf dem Gebiet der Formulierung von Pigmentpasten für kathodisch abscheidbare Überzugsmittelzusammensetzungen erkennen läßt, handelt es sich dabei um eine Aufgabe, für die trotz jahrelanger Versuche und einer großen Anzahl von Vorschlägen noch immer keine in jeder Hinsicht befriedigende Lösung vorliegt.

Es wurde nun gefunden, daß durch eine sorgfältige Abstimmung verschiedener Modifikationsmöglichkeiten bei Bisphenol A-Epoxidharzen eine optimale Erfüllung der verschiedenartigen Anforderungen an Pigmentpastenharze für kathodisch abscheidbare Zusammensetzungen erreicht werden kann.

Die vorliegende Erfindung betrifft demgemäß ein Verfahren zur Herstellung von Pigmentpastenharzen auf der Basis von modifizierten Epoxidharzen für kathodisch abscheidbare Überzugsmittelzusammensetzungen, welches dadurch gekennzeichnet ist, daß man

(A) ein gegebenenfalls modifiziertes Epoxidharz, welches mindestens eine Epoxygruppe, vorzugsweise 2 Epoxygruppen, und eine Glasübergangstemperatur zwischen 10 und 40° C, vorzugsweise zwischen 20 und 35° C, aufweist, mit

(B) 50 bis 100 Mol %, bezogen auf die freien Epoxygruppen von (A), eines primär-tertiären Diamins, vorzugsweise eines N,N-Dialkylaminoalkylamins, und

(C) gegebenenfalls gleichzeitig oder anschließend die verbleibenden freien Epoxygruppen mit einem primären oder sekundären Amin umsetzt,

(D) das Reaktionsprodukt mit 80 bis 100 Mol %, bezogen auf die Summe der primären Aminogruppen der gemäß (B) und (C) eingesetzten Amine, Formaldehyd unter Bildung von Oxazolidinstrukturen umsetzt,

(E) mindestens 20 Mol % der tertiären Aminogruppen des eingesetzten Diamins (B) unter Verwen-

2

dung einer organischen Säure, vorzugsweise Ameisensäure, und einer Monoglycidylverbindung in Gegenwart von Wasser quaterniert, und

(F) die eingesetzte Menge der Säure auf 80 bis 100 Millimol/100 g Festharz ergänzt und das Produkt mit Wasser auf die Verarbeitungsviskosität einstellt, mit der Maßgabe, daß der Quaternierungsgrad so gewählt wird, daß eine, neben maximal 5 Gew.-% anderer organischer Lösungsmittel, 45 Gew.-% Monoethylenglykolmonobutylether enthaltende Lösung des nach der Stufe (E) erhaltenen Produktes bei Raumtemperatur in jedem Verhältnis klar mit Wasser mischbar ist.

Die Erfindung betrifft weiters Pigmentpastenharze auf der Basis von aus gegebenenfalls modifizierten Epoxidharzen erhaltenen Epoxidharz-Aminaddukten, die durch anteilige oder vollständige Reaktion von sekundären Aminogruppen mit Formaldehyd Oxazolidinstrukturen aufweisen, und deren durch primär-tertiäre Diamine eingeführten tertiären Aminogruppen zu mindestens 20 Mol % mit einer organischen Säure und einer Monoglycidylverbindung quaterniert sind, und welche in der mit Wasser auf die Verarbeitungsviskosität eingestellten Anlösung eine Gesamtmenge von 80 bis 100 Millimol Säure/100 g Festharz enthalten.

Die erfindungsgemäß hergestellten Produkte ergeben auch bei verschiedenartiger Zusammensetzung der eingesetzten Pigmente Pigmentpasten, welche die unterschiedlichen Anforderungen der Praxis erfüllen, und sowohl in konzentrierter als auch in verdünnter Form eine praxisgerechte Stabilität aufweisen, aufgrund ihrer Rheologie leicht verarbeitbar sind, eine einwandfreie Filmausbildung bei der Abscheidung und beim Vernetzungsvorgang gewährleisten und die Eigenschaften der applizierten Filme nicht negativ beeinflussen.

Die eingesetzten Epoxidharze weisen im Mittel mindestens eine Epoxygruppe, vorzugsweise 2 Epoxygruppen, und eine Glasübergangstemperatur zwischen 10 und 40° C, vorzugsweise zwischen 20 und 35° C, auf, wobei der Glasübergangstemperatur eine wesentliche Bedeutung für die Eigenschaften des Endproduktes zukommt. Als grobe Faustregel kann gelten, daß der beanspruchte Bereich dann erreicht wird, wenn diese Komponente einen Anteil von 40 bis 80 Gew-% an aromatischen Molekülbausteinen bzw. 60 bis 20 Gew.-% an aliphatischen Molekülbausteinen aufweist. Solche Produkte sind handelsüblich, können jedoch auch in einfacher und bekannter Weise durch Modifikation von Epoxidharzen auf Polyphenolbasis erhalten werden. Bevorzugt werden als Ausgangsmaterial für eine Modifizierung die Diglycidylether des Bisphenol A, die ein Epoxyäquivalentgewicht zwischen etwa 200 und 1000 aufweisen, herangezogen.

Der für die Glasübergangstemperatur notwendige aliphatische Anteil kann sowohl durch eine Modifikation mit Polyglycidylethern von aliphatischen Verbindungen, wie von (Poly)glykolen oder aliphatischen Carbonsäuren, wie auch durch Verknüpfung der Epoxidharze durch aliphatische und/oder aromatische Brücken eingebracht werden.

Beispiele für derartige Modifikationen sind:

Verknüpfung von Bisphenol-Epoxidharzen mit sekundären Diaminen, z. B. einem Umsetzungsprodukt aus 2 Mol bzw. 3 Mol eines Monoglycidylesters oder -ethers und 1 Mol Hexandiamin oder Bis-hexantriamin.

Verknüpfung von Bisphenol-Epoxidharzen durch Polyetherdiole, wie alkoxylierte Diphenole, bzw. Polyesterdiole, wie Polycaprolactondiole. Weitere Reaktionspartner für eine Verknüpfung sind Dicarbonsäuren, wie Adipinsäure oder Dimerfettsäuren. Gute Ergebnisse werden auch bei Verknüpfungen mit (Poly)disulfiden erhalten.

Verknüpfung einer Bisphenol-A-Diepoxidverbindung mit einem aliphatischen Diepoxid auf Polyglykolbasis durch eine aromatische Brücke, z. B. Bisphenol A.

Gegebenenfalls kann eine Defunktionalisierung eines Teiles der Epoxygruppen z. B. durch den Einsatz von Monophenolen, wie Octyl- oder Nonylphenol, erfolgen.

Die Verfahren für die aufgezählten und für gegebenenfalls andere Modifikationen dieser Art sind in der einschlägigen Literatur zu finden.

50 bis 100 Mol % der freien Epoxygruppen dieser gegebenenfalls modifizierten Epoxidharze werden, vorzugsweise in Gegenwart eines reaktionsinerten Lösungsmittels, mit einem primär-tertiären Diamin reagiert. Vorzugsweise werden dafür N,N-Dialkylaminoalkylamine, wie das Dimethylaminoethylamin oder homologe Verbindunge, eingesetzt.

Als organische Lösungsmittel werden wasserverdünnbare oder zumindest wassertolerante Lösungsmittel verwendet, welche die Reaktionen bei der Herstellung unter den gegebenen Bedingungen nicht beeinflussen. Dazu zählen die Glykolmono- und -diether oder Methylisobutylketon. Vorteilhafterweise werden zumindest die Versuchskochungen zur Festlegung des Quaternierungsgrades in Gegenwart von Monoethylenglykolmonobutylether durchgeführt.

Gegebenenfalls verbleibende Epoxygruppen werden mit primären oder sekundären Aminen, insbesondere Alkyl-und/oder Alkanolaminen umgesetzt. Die primären Amine werden dabei vorzugsweise in solchen Mengen eingesetzt, daß pro Epoxygruppe ein Mol des Amins verwendet wird. Die so resultierenden sekundären Aminogruppen können in die nächste Reaktionsstufe, d. h. in die Bildung von Oxazolidinringen, einbezogen werden. Die Reaktion mit den Monoaminen erfolgt vorteilhafterweise gleichzeitig mit der

3

Diaminreaktion.

Die bei der Aminreaktion gebildeten sekundären β-Hydroxyalkylaminverbindungen werden in der nächsten Reaktionsstufe mit 80 bis 100 Mol % Formaldehyd unter Abspaltung von jeweils 1 Mol Reaktionswasser pro Mol eingesetzem Formaldehyd unter Ausbildung von Oxazolidinstrukturen reagiert. Das Reaktionswasser wird mit Hilfe eines Schleppmittels, z.B. Methylisobutylketon, durch azeotrope Destillation aus der Reaktionsmasse entfernt.

In einer letzten Modifizierungsstufe erfolgt eine anteilige Quaternierung der tertiären Aminogruppen des Produkts, wobei als Mindestmenge 20 Mol % der durch das primär-tertiäre Diamin eingeführten tertiären Amino gruppen mit einer organischen Säure und einer Monoglycidylverbindung in Gegenwart von Wasser umgesetzt werden. Der optimale Anteil an quaternären Gruppen ist dann gegeben, wenn eine Lösung des quaternierten Produktes, die, neben maximal 5 % anderer organischer Lösungsmittel, 45 Gew.-% Monoethylenglykolmonobutylether enthält, bei Raumtemperatur in jedem Verhältnis mit Wasser mischbar ist. Vorzugsweise wird der Quaternierungsgrad nicht wesentlich höher gewählt, als zur einwandfreien Erfüllung der Löslichkeitsbedingungen notwendig ist. Dieser optimale Quaternierungsgrad wird vorteilhafterweise bei einer Versuchskochung unter Verwendung der entsprechenden Menge des Testlösungsmittels festgelegt.

In der letzten Verfahrensstufe wird das Produkt mit soviel einer organischen Säure versetzt, daß die Gesamtmenge an Säure, d. h. einschließlich der für die Quaternierung verbrauchten Säure, 80 bis vorzugsweise 100 Millimol pro 100 g Festharz beträgt. Als Säure wird in dieser Stufe, ebenso wie bei der Quaternierung, Ameisensäure, Essigsäure oder Milchsäure verwendet. Bevorzugt wird für beide Verfahrensschritte Ameisensäure eingesetzt. Im allgemeinen wurde festgestellt, daß bei Verwendung geringerer Säuremengen zwar die Löslichkeit des Pastenharzes gegeben sein kann, jedoch nicht die optimalen Stabilitätseigenschaften erreicht werden und auch die Pigmentbenetzung verschlechtert wird.

Das Produkt wird dann mit Wasser auf die gewünschte Verarbeitungsviskosität eingestellt.

Die erfindungsgemäß hergestellten Produkte dienen zur Herstellung der Pigmentpasten für kathodisch abscheidbare Überzugsmittelzusammensetzungen. Neben den Pigmen ten können die Pasten die üblichen Zusatzstoffe, wie Netzmittel, Entschäumer u. ä., enthalten.

Die Formulierung der Pigmentpaste sowie die Auswahl und die Methoden der Anreibung der Pigmente sind aus der Literatur bekannt. Die Komplettierung der Pigmentpaste zu einem Badmaterial bzw. zu einer Nachgabekomponente erfolgt ebenfalls in der in der Praxis üblichen Weise. Als Hauptbindemittel können dabei die bekannten Produkte eingesetzt werden, wobei der Anteil des Pastenharzes vom gesamten Harzanteil der Zusammensetzung zwischen 5 und 50 Gew.-% betragen kann. Die Methoden der Elektrobeschichtung sind ebenfalls literaturbekannt und bedürfen keiner weiteren Beschreibung.

Das folgende Beispiel erläutert die Erfindung, ohne sie in ihrem Umfang zu beschränken. Alle Angaben in Teilen oder Prozenten beziehen sich, soferne nicht anderes angegeben ist, auf Gewichtseinheiten.

Beispiel:

(a) In einem geeigneten Reaktionsgefäß werden 215 Tle Bishexamethylentriamin (1 Mol) auf 90° C erwärmt und innerhalb einer Stunde gleichmäßig mit 558 Tlen 2-Ethylhexylglycidylether (3 Mol) versetzt, wobei die Temperatur auf 130° C gesteigert wird. Diese Temperatur wird nach Ende der Zugabe noch eine weitere Stunde gehalten.

(b) In einem anderen Reaktionsgefäß werden 1900 Tle eines Bisphenol-A-Epoxidharzes (Epoxy-Äquivalent 475) in 2454,5 Tlen Monoethylenglykolmonobutylether bei 50 bis 60° C gelöst und mit 773 Tlen der unter (a) hergestellten Komponente versetzt und 1 Stunde bei 120° C reagiert. Das so erhaltene Zwischenprodukte weist eine mittlere Glasübergangstemperatur von ca. 30° C auf. Nach Kühlen auf 70° C werden 204 Tle Dimethylaminopropylamin (2 Mol) zugesetzt. Nach einer Reaktionszeit von weiteren 2 Stunden bei 70 - 80° C werden 66 Tle Paraformaldehyd (91%ig, 2 Mol) zugesetzt. Die Temperatur wird auf 120 bis 140° C gesteigert und das entstehende Reaktionswasser mit Hilfe von Methylisobutylketon als Schleppmittel azeotrop abgetrennt. Sobald ca. 36 Tle Reaktionswasser gebildet sind, wird das Produkt bei 70° C mit 290,7 ml 5n-Ameisensäure (= 50 Millimol Säure/100 g Festharz), 93 Tlen 2-Ethylhexylglycidylether (0,5 Mol) und 317 Tlen Wasser versetzt und 1 Stunde bei dieser Temperatur gehalten.

Das quaternierte Produkt liegt in 49,5%iger Lösung vor und ist bei Raumtemperatur in jedem Verhältnis mit Wasser verdünnbar. (Die Lösung enthält 45 % Monoethylenglykolmonobutylether). Anschließend werden weitere 290,7 ml 5n-Ameisensäure zugesetzt und das Bindemittel mit Wasser auf einen Festkörpergehalt von 14 % verdünnt.

Herstellung und Prüfung einer Pigmentpaste

Auf einer Laborsandmühle wurde nach dem folgenden-Ansatz eine Pigmentpaste hergestellt:

| 1428,5 | Tle Bindemittel 14%ig gemäß Beispiel |
|--------|--------------------------------------|
| 30     | Tle Farbruß                          |
| 225    | Tle Aluminiumsilikatpigment          |
| 840    | Tle Titandioxid                      |
| 105    | Tle Bleisilikatpigment               |
| 2628,5 | Tle Pigmentpaste 53,3 %              |

Der Ansatz weist eine Viskosität (DIN 53211/20°C) von ca. 20 Sekunden auf.
Die Pigmentpaste zeigt nach einer einwöchigen Lagerung bei 50°C praktisch keine Veränderung.

Herstellung der Bindemitteldispersion

Das Bindemittel für die im Elektrotauchlack eingesetzte Bindemitteldispersion wird auf der Basis von modifizierten Epoxidharzen analog Beispiel 1 der AT-PS 353369 hergestellt:

A) Herstellung der Komponente A

In einem mit Rührer, Thermometer, Tropftrichter und Rückflußkühler ausgestatteten Reaktionsgefäß werden 1000 g eines Epoxidharzes auf Bisphenol A-Basis (Epoxy-Äquivalent ca. 500) in 500 g Methylisobutylketon (MIBK) bei 60 - 70°C gelöst und 0,2 g Hydrochinon und 168 g Methacrylsäure zugegeben. Die Temperatur wird auf 100 - 120°C gesteigert und die Reaktion bei dieser Temperatur bis zu einer Säurezahl von unter 3 mg KOH/g geführt. Anschließend wird das Reaktionsprodukt bei 60 - 70°C mit 650 g BMI (70%ige Lösung in MIBK eines basischen Monoisocyanates, hergestellt aus 1 Mol Toluylendiisocyanat und 0,9 Mol Dimethylethanolamin) versetzt und bis zu einem NCO-Wert von praktisch Null reagiert.

B) Herstellung der Komponente B

In einem mit Rührer, Thermometer, Tropftrichter und Rückflußkühler ausgestatteten Reaktionsgefäß werden 400 g eines Epoxidharzes auf Bisphenol A-Basis (Epo xid-Äquivalent ca. 200) in 172 g MIBK gelöst und bei 60 - 70°C 210 g Diethanolamin zugegeben. Nach der Exothermie wird noch eine Stunde bei ca. 130°C (Rückfluß) reagiert. In weiterer Folge wird das Reaktionsprodukt bei 70 - 80°C mit 830 g UMI (70%ige Lösung MIBK eines ungesättigten Monoisocyanates, hergestellt aus 1 Mol Toluylendiisocyanat und 1 Mol Hydroxyethylmethacrylat) bis zu einem NCO-Wert von praktisch Null umgesetzt.

Herstellung der Dispersion

Die Komponenten A und B werden bei 70°C in einem Mischungsverhältnis von 80/20 gründlich vermischt und mit 30 Millimol Ameisensäure pro 100 g Festharz neutralisiert. Unter Vakuum bei 80°C wird das Lösungsmittel MIBK größtenteils abdestilliert. In weiterer Folge wird das Produkt unter maximaler Rührung und bei fallender Temperatur mit deionisiertem Wasser auf ca. 45 % verdünnt. Bei dieser Konzentration wird 2 Stunden unter Kühlung kräftig dispergiert und der Festkörper bestimmt. Abschließend wird das Produkt mit deionisiertem Wasser weiter auf 35 % verdünnt.

Herstellung einer Elektrotauchlackzusammensetzung

Gemäß der folgenden Formulierung wurde ein Badmaterial für die Elektrotauchlackierung hergestellt:

| | |
|---|---|
| 1600,-<br>2872,5<br>527,5 | Bindemitteldispersion, 35%ig<br>deionisiertes Wasser<br>Pigmentpaste, 53,3 % gemäß Beispiel |
| 5000,- | Lack |

Der Lack weist einen Festkörpergehalt von 16,8 % und einen pH-Wert von 6,0-6,2 auf. Nach 25 Stunden Homogenisierung durch Rühren wird der Lack durch ein gewogenes Perlonsieb (Maschenweite 30 μm) filtriert. Der Rückstand im Sieb beträgt 8 mg pro Liter Badmaterial.

Mit dem Lack wurden zinkphosphatierte Stahlbleche unter folgenden Badbedingungen beschichtet und eingebrannt:

Badtemperatur: 28 - 30° C

Beschichtungsspannung: 300 V

Beschichtungszeit: 2 Minuten

Einbrennbedingungen: 15 Minuten, 180° C

Filmschichtstärke: 23 - 25 μm

Die Filme zeigen eine glatte Oberfläche und wurden im VDA-Wechseltest gemäß VDA-Prüfblatt 621-415 auf ihre Korrosionsfestigkeit geprüft. Nach 10 Runden ergab sich eine Unterwanderung von maximal 2 mm vom Kreuzschnitt.

Eine Abscheidung auf einem rechtwinkelig gebogenen Stahlblech (L-Blechtest) ergab eine glatte Fläche auch am horizontalen Blechabschnitt (keine Pigmentsedimentation). Eine Wiederholung der Prüfungen nach einer Alterungszeit von 3 Wochen (Raumtemperatur) ergab praktisch unveränderte Resultate.

## Ansprüche

1. Verfahren zur Herstellung von Pigmentpastenharzen auf der Basis von modifizierten Epoxidharzen für kathodisch abscheidbare Überzugsmittelzusammensetzungen, dadurch gekennzeichnet, daß man

(A) ein gegebenenfalls modifiziertes Epoxidharz, welches mindestens eine Epoxygruppe, vorzugsweise 2 Epoxygruppen, und eine Glasübergangstemperatur zwischen 10 und 40° C, vorzugsweise zwischen 20 und 35° C, aufweist, mit

(B) 50 bis 100 Mol %, bezogen auf die freien Epoxygruppen von (A), eines primär-tertiären Diamins, vorzugsweise eines N,N-Dialkylaminoalkylamins, und

(C) gegebenenfalls gleichzeitig oder anschließend die verbleibenden freien Epoxygruppen mit einem primären oder sekundären Amin umsetzt,

(D) das Reaktionsprodukt mit 80 bis 100 Mol %, bezogen auf die Summe der primären Aminogruppen der gemäß (B) und (C) eingesetzten Amine, Formaldehyd unter Bildung von Oxazolidinstrukturen umsetzt,

(E) mindestens 20 Mol % der tertiären Aminogruppen des eingesetzten Diamins (B) unter Verwendung einer organischen Säure, vorzugsweise Ameisensäure, und einer Monoglycidylverbindung in Gegenwart von Wasser quaterniert, und

(F) die eingesetzte Menge der Säure auf 80 bis 100 Millimol/100 g Festharz ergänzt und das Produkt mit Wasser auf die Verarbeitungsviskosität einstellt,

mit der Maßgabe, daß der Quaternierungsgrad so gewählt wird, daß eine neben maximal 5 Gew.-% anderer organischer Lösungsmittel 45 Gew.-% Monoethylenglykolmonobutylether enthaltende Lösung des nach der Stufe (E) erhaltenen Produktes bei Raumtemperatur in jedem Verhältnis klar mit Wasser mischbar ist.

2. Verfahren nach Anspruch 1, dadurch gekennzeichnet, daß als modifiziertes Epoxidharz Produkte, die aus Bisphenol-A-Epoxidharzen und aliphatischen Diepoxidharzen durch Verknüpfung über aromatische und/oder aliphatische Brückenglieder erhalten wurden, eingesetzt werden.

3. Verfahren nach Anspruch 2, dadurch gekennzeichnet, daß als aromatisches Brückenglied ein Diphenol, vorzugsweise Bisphenol A, eingesetzt wird.

4. Verfahren nach Anspruch 1, dadurch gekennzeichnet, daß als modifiziertes Epoxidharz Produkte, die durch Verknüpfung von Bisphenol-A-Epoxidharzen über aliphatische und/oder gegebenenfalls zusätzliche aromatische Brückenglieder erhalten wurden, eingesetzt werden.

5. Verfahren nach den Ansprüchen 1 bis 4, dadurch gekennzeichnet, daß als aliphatisches Brückenglied ein Umsetzungsprodukt aus 2 bzw. 3 Mol einer aliphatischen, vorzugsweise längerkettigen, Monoglycidylverbindung mit 1 Mol eines diprimären aliphatischen Diamins oder Triamins eingesetzt wird.

6. Verfahren nach Anspruch 1, dadurch gekennzeichnet, daß als modifiziertes Epoxidharz Produkte, die aus Bisphenol-A-Epoxidharzen durch Verknüpfung über (Poly)disulfide erhalten wurden, eingesetzt werden.

7. Pigmentpastenharze auf der Basis von aus gegebenenfalls modifizierten Epoxidharzen erhaltenen Epoxidharz-Aminaddukten, die durch anteilige oder vollständige Reaktion von sekundären Aminogruppen und Formaldehyd Oxazolidinstrukturen aufweisen, und deren durch primär-tertiäre Diamine eingeführten tertiären Aminogruppen zu mindestens 20 Mol % mit einer organischen Säure und einer Monoglycidylverbindung quaterniert sind, und welche in der mit Wasser auf die Verarbeitungsviskosität eingestellten Anlösung eine Gesamtmenge von 80 bis 100 Millimol Säure/100 g Festharz enthalten.